# EUROPEAN PATENT SPECIFICATION

(11) **EP 2 605 485 B1**
(45) Date of publication and mention of the grant of the patent: **03.05.2017**
(21) Application number: 12199020.4
(22) Date of filing: 30.10.2009
(51) Int. Cl.: H04L 29/08

(54) **Communication system incorporating ambient sound pattern detection and method of operation thereof**
Kommunikationssystem, das Raumgeräuschmustererkennung integriert, und Verfahren zu dessen Betrieb
Système de communication intégrant une détection du motif sonore ambiant et son procédé de fonctionnement

(30) Priority: 31.10.2008 US 110509 P
(43) Date of publication of application: 19.06.2013
(62) Divisional of application: 09306041.6
(73) Proprietor: Orange, 75015 Paris (FR)
(72) Inventor: Hannaby, Daniel, SAN FRANCISCO, CA California CA 94109 (US)

(56) References cited:
- WO-A2-02/27600
- US-A1- 2006 206 379

## Description

### FIELD OF THE PRESENT SYSTEM:

The present system relates to at least one of a system, method, user interface, and apparatus for detecting an ambient sound pattern in ambient noise and performing context-driven actions based on the detected ambient sound pattern and user specific information.

### BACKGROUND OF THE PRESENT SYSTEM:

As mobile communication devices (MDs), such as, for example, personal communicators, cell and smart phones, Palms™, personal digital assistants (PDAs), and the like, have become more commonplace, users' reliance upon various features and services provided by these MDs has increased. Similarly, businesses have also begun to utilize various features and services provided by MDs to promote sales, by, for example, sending advertisements to a consumer's (or potential consumer's) MD. For example, a business may "push" an advertisement to a targeted consumer via an email or simple mail service (SMS) message which may be sent to, for example, a targeted consumer's Blackberry™-type MD at a periodic interval (e.g., once a week, etc.). Unfortunately, while the pushed advertisement may contain information which is useful to the targeted consumer, it may be received at the wrong time. For example, the advertisement may be received when the consumer is sleeping or at work, or otherwise in the wrong circumstances or location to complete a purchase of an item from the business. Accordingly, the targeted consumer may delete, forget, or otherwise disregard the advertisement, and, as a result, the business may not benefit from this type of pushed advertisement.

Further, although there have been attempts to use a global positioning systems (GPSs) to determine an MD's location, and, thereafter, push information to the MD based upon the MD's location, this type of advertising may consume valuable resources of both the MD and a network in which the MD is located. Further, GPS location may not work in shielded environments such as in an indoor environment as is typically found in shopping malls, or dense urban environments. Further, to use this system, the MD must include GPS receivers.

Document US2006/206379 teaches a method of rendering information comprising acts of capturing ambient sound information, determining whether recognizable patterns are present in the captured ambient sound information; requesting content information when it is determined that the recognizable patterns are present in the captured ambient sound information; and rendering the requested content information.

Document WO02/027600 discloses a method for capturing ambient sound information, processing the captured ambient sound to construct a set of values, and compare the constructed set of values with a library containing a plurality of set of values corresponding to identified recorded sound.

However, none of these prior systems provides a system, method, user interface and device to perform context driven searches actions using a detected ambient sound pattern that may include a watermark or other distinguishing element, and perform actions based upon results of the search.

### SUMMARY OF THE PRESENT SYSTEM:

It is an object of the present system to overcome disadvantages and/or make improvements in the prior art.

The present system includes a system, method, device, and/or interface for collecting information such as audio information, detecting one or more patterns such as watermarks in the collected audio information in the collected information, determining whether information corresponding to the detected one or more patterns exists, performing a search of user information using the information corresponding to the detected one or more patterns and providing the results of the search to a rendering device such as, for example, a mobile station (MS), and rendering results of the search on the MS.

In accordance with the present system, a context-sensitive search may include a method of rendering information including the acts of: capturing ambient information; determining whether one or more distinguishing patterns is present in the captured ambient information; accessing user profile information; requesting content information when it is determined that the captured one or more distinguishing patterns is present in the captured ambient information; and rendering the requested content information. The method may also include receiving the requested content information. The content information may be selected in accordance with the captured ambient information and the user profile information. Further, the captured ambient information may include audio or visual information.

According to the method, one or more distinguishing patterns may be selectively added to the ambient information. Further, the user profile information may include information related to one or more user identification (ID), user purchase history, time of purchase history, purchase type history, family information, friend information, purchase location.

According to the method, the one or more distinguishing patterns may include watermarks which are contained in a header or a footer of at least a portion of the ambient information. Further, the act of determining whether one or more distinguishing patterns is present in the captured ambient information, may include searching a list of distinguishing patterns that was transmitted from a base station (BS) to a mobile station (MS).

Moreover, the method may further include transmitting the requested content information to a mobile station (MS) only when it is determined that the one or more distinguishing patterns are present in the captured ambient information. Further, the method may include transmitting, from a mobile station (MS), a query including the information including the distinguishing patterns to a base station (BS).

In accordance with another embodiment of the present system, method, device, and/or interface, a watermarking method may include the acts of: creating one or more watermarks; inserting at least one watermark of the one or more watermarks into a header or a footer of audio content so as to form watermarked audio content; and transmitting the watermarked audio content. The method may further include forming a query using at least one watermark of the one or more watermarks.

Moreover, the method may include obtaining content information in accordance with the query and user profile information, and rendering the selected content.

Further, the method may include storing the one or more watermarks in a database, and/or transmitting, from a base station (BS), a list including the one or more watermarks to a mobile station (MS).

According to the method the MS may store the list including the one or more watermarks.

The present system may also include a computer program stored on a computer readable memory medium, the computer program may be configured to capture ambient information to be used for rendering content, the computer program may further include a program portion configured to: capture ambient information; determine whether one or more distinguishing patterns are present in the captured ambient information; access user profile information; request content information when it is determined that the captured one or more distinguishing patterns is present in the captured ambient information; and render the requested content information.

An application according to the present system and embodied on a computer readable medium is also provided. This application may be arranged to perform a method for pushing information to a mobile device such as an MS, the mobile device including a microphone for listening to ambient sounds, a speaker for producing sounds, a memory for storing user profile information. The application may comprise a portion to detect, using the microphone, a watermark sound pattern included in ambient information.

The methods of the present a system, device, and/or interface may be performed by an application embodied on a computer readable medium. This application may be arranged to perform, *inter alia,* a method for pushing information to a mobile device such as an MS, the mobile device including a microphone for listening to ambient sounds, a speaker for producing sounds, a memory for storing user profile information. The application may comprise a portion to detect, using the microphone, a watermark sound pattern included in ambient information.

### BRIEF DESCRIPTION OF THE DRAWINGS:

The invention is explained in further detail, and by way of example, with reference to the accompanying drawings wherein:
FIG. 1 shows a graphical user interface in accordance with an embodiment of the present system;
FIG. 2 shows a flow diagram that illustrates a content reviewing process in accordance with an embodiment of the present system;
FIG. 3 shows a schematic of an embodiment of the present system;
FIG. 4 shows further graphical user interfaces in accordance with an embodiment of the present system;
FIG. 5A shows an ambient information source in accordance with an embodiment of the present system;
FIG. 5B shows another ambient information source in accordance with another embodiment of the present system;
FIG. 6 shows a system in accordance with an embodiment of the present system;
FIG. 7 shows an operation of a system in accordance with an embodiment of the present system in a store-type setting;
FIG. 8 shows an operation of a system in accordance with an embodiment of the present system in another store-type setting;
FIG. 9 shows an operation of a system in accordance with another embodiment of the present system in a PC-type setting; and
FIG. 10 shows an operation of a system in accordance with an embodiment of the present system in an emergency-type setting.

### DETAILED DESCRIPTION OF THE PRESENT SYSTEM:

The following are descriptions of illustrative embodiments that when taken in conjunction with the following drawings will demonstrate the above noted features and advantages, as well as further ones. In the following description, for purposes of explanation rather than limitation, illustrative details are set forth such as architecture, interfaces, techniques, element attributes, etc. However, it will be apparent to those of ordinary skill in the art that other embodiments that depart from these details would still be understood to be within the scope of the appended claims. Moreover, for the purpose of clarity, detailed descriptions of well known devices, circuits, tools, techniques and methods are omitted so as not to obscure the description of the present system. It should be expressly understood that the drawings are included for illustrative purposes and do not represent the scope of the present system. In the accompanying drawings, like reference numbers in different drawings may designate similar elements.

For purposes of simplifying a description of the present system, the terms "operatively coupled", "coupled" and formatives thereof as utilized herein refer to a connection between devices and/or portions thereof that enables operation in accordance with the present system. For example, an operative coupling may include one or more of a wired connection and/or a wireless connection between two or more devices that enables a one and/or two-way communication path between the devices and/or portions thereof. For example, an operative coupling may include a wired and/or wireless coupling to enable communication between a content server and one or more user devices. A further operative coupling, in accordance with the present system may include one or more couplings between two or more user devices, such as via a network source, such as the content server, in accordance with an embodiment of the present system.

The term rendering and formatives thereof as utilized herein refer to providing content, such as digital media, such that it may be perceived by at least one user sense, such as a sense of sight and/or a sense of hearing. For example, the present system may render a user interface on a display device so that it may be seen and interacted with by a user. Further, the present system may render audio visual content on both of a device that renders audible output (e.g., a speaker, such as a loudspeaker) and a device that renders visual output (e.g., a display). To simplify the following discussion, the term content and formatives thereof will be utilized and should be understood to include audio content, visual content, audio visual content, textual content and/or other content types, unless a particular content type is specifically intended, as may be readily appreciated.

The system, device(s), method, user interface, etc., described herein address problems in prior art systems. In accordance with an embodiment of the present system, a device and technique is provided for imbedding an identifying characteristic such as, for example, a watermark, in a desired content item. The desired content item may include, for example, audio and/or visual information. Thereafter, the system may detect the identifying characteristic and perform a predetermined action based upon user information and sound pattern information. In addition, the present system may collect other statistics related to the user and/or user device (e.g., the MS) in accordance with the present system, such as a relative time of an action, geolocation, network, detected content item, etc.

The user interaction with and manipulation of the computer environment is achieved using any of a variety of types of human-processor interface devices that are operationally coupled to the processor controlling the displayed environment. A common interface device for a user interface (UI), such as a graphical user interface (GUI) is a mouse, trackball, keyboard, touch-sensitive display, etc. For example, a mouse may be moved by a user in a planar workspace to move a visual object, such as a cursor, depicted on a two-dimensional display surface in a direct mapping between the position of the user manipulation and the depicted position of the cursor. This is typically known as position control, where the motion of the depicted object directly correlates to motion of the user manipulation.

An example of such a GUI in accordance with an embodiment of the present system is a GUI that may be provided by a computer program that may be user invoked, such as to enable a user to select and/or classify/annotate content. In accordance with a further embodiment, the user may be enabled within a visual environment, such as the GUI, to classify content utilizing a reduced description palette to simplify content analysis, presentation, sharing, etc., of separate content portions in accordance with the present system. To facilitate manipulation (e.g., content selection, annotation, sharing, etc.) of the content, the GUI may provide different views that are directed to different portions of the present process.

For example, the GUI may present a typical UI including a windowing environment and as such, may include menu items, pull-down menu items, pop-up windows, etc., that are typical of those provided in a windowing environment, such as may be represented within a Windows™ Operating System GUI as provided by Microsoft Corporation and/or an OS X™ Operating System GUI, such as provided on an iPhone™, MacBook™, iMac™, etc., as provided by Apple, Inc., and/or another operating system. The objects and sections of the GUI may be navigated utilizing a user input device, such as a mouse, trackball, finger, and/or other suitable user input. Further, the user input may be utilized for making selections within the GUI such as by selection of menu items, window items, radio buttons, pop-up windows, for example, in response to a mouse-over operation, and other common interaction paradigms as understood by a person of ordinary skill in the art.

Similar interfaces may be provided by a device having a touch sensitive screen that is operated on by an input device such as a finger of a user or other input device such as a stylus. In this environment, a cursor may or may not be provided since location of selection is directly determined by the location of interaction with the touch sensitive screen. Although the GUI utilized for supporting touch sensitive inputs may be somewhat different than a GUI that is utilized for supporting, for example, a computer mouse input, however, for purposes of the present system, the operation is similar. Accordingly, for purposes of simplifying the foregoing description, the interaction discussed is intended to apply to either of these systems or others that may be suitably applied.

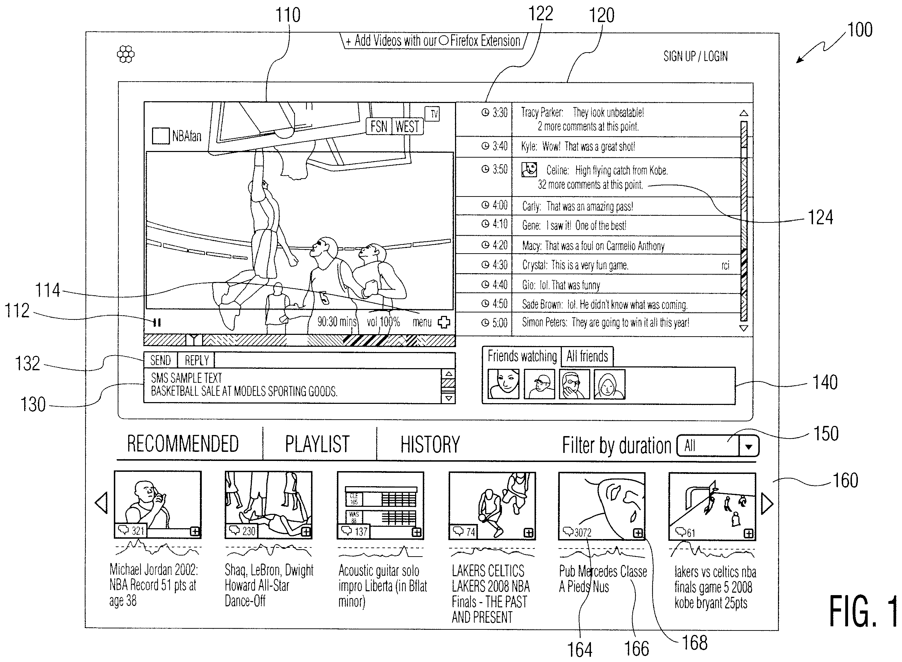

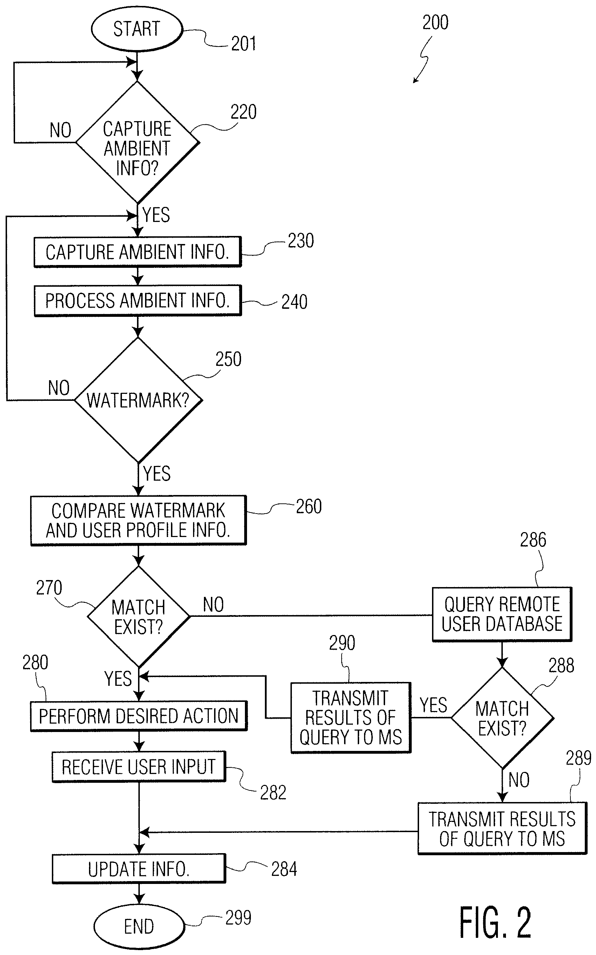

FIGs. 1 and 2 will be discussed below to facilitate a discussion of illustrative embodiments of the present system.

According to the present system, ambient audio information may be captured and processed to determine whether any watermarks, patterns, or other distinguishing features (hereinafter "watermark"), may be present in the ambient audio information. If it is determined that a watermark is detected, a user profile database may be accessed or queried to obtain or determine appropriate information to render on, for example, a UI of the MS. For example, if ambient audio information is determined to contain a watermark corresponding to a certain event, such as, for example, a sporting event such as a basketball game, the user profile database may be accessed to determine an appropriate action. In the present example, the appropriate information to render may include content information which may include comment information, related information, image information such as, a clip, a video (live or recorded), and/or other information which may be rendered by the MS as will be described below with reference to FIG. 1.

Furthermore, what will be referred to as an "ambient sound," "sound," "ambient audio information" or "ambient information" in this description may be seen in general as a vibration transmitted through a solid, liquid, or gas, vibrations composed of frequencies capable of being detected by a microphone (MIC) of a portable device or MS. A watermark may be formed using an audio pattern, a pressure pattern, and/or an audio or audio-visual pattern. For example, a watermark may be formed by a pattern of sounds carrying information, like digital information that may be transferred into other audio and/or audio-visual content which may be output by an output device such as a transducer, a speaker, a strobe, a lighting device, etc. This is distinct from random ambient sounds that may not carry any information.

FIG. 1 shows one embodiment of the present system, wherein a GUI 100 is provided having a content rendering portion 110 and one or more other portions, such as a user comment portion 120, a buddy portion 140, a message area 130, etc.

FIG. 2 shows a flow diagram that illustrates a process 200 in accordance with an embodiment of the present system. The process 200 may be performed using one more computers communicating over a network. The process 200 can include one of more of the following acts. Further, one or more of these acts may be combined and/or separated into sub-acts, if desired. In operation, the process may start during act 201.

In act 220, it is determined whether it is desirable to capture ambient information. It may be desirable to capture ambient information when, for example, one or more of the following events occurs: (a) a user or network request is detected; (b) an ambient situation is detected; (c) a period of time (T) passes; and (d) a physical location is detected. The user request may, for example, be input directly into the MS via an user input device at the users convenience. The network request may be received from, for example, a base station (BS) as a result of another event. For example, a network request may be generated when, for example, the period of time (T) is determined to have passed, an MS is determined to be in, or within, a certain location, an ambient sound is detected via, for example, the MS's MIC, etc.

The ambient situation may be detected when, for example, a noisy environment is detected by the MS or the network; an environment having a certain lighting characteristic is detected; a certain content (e.g., channel, station, web address, etc.) is accessed and/or rendered by the MS; etc. Further, the MS may determine that it is in a noisy environment when an ambient sound above a predetermined threshold is detected. Further, desired lighting characteristics may include, for example, a certain lighting hue, intensity, and/or changes in hue and/or intensity such as may occur when, for example, flashing lights are detected. Further, an infrared (IR) detector may be used to detect IR ambient information. With reference to location, when, for example, the MS is determined to be within a certain location of, for example a particular store, it may be desirable to capture ambient information. The location may be determined using, for example, global positioning system (GPS) information, assisted-GPS (A-GPS), triangulation information, BS identification (ID) information, etc. As methods to determine a physical location of an MS are known in the art, for the sake of clarity, a further description thereof will be omitted. Moreover, an ambient situation may be detected, when, for example, the MS detects that there is a certain number of other devices within a predetermined distance of the MS. This can be accomplished by, for example, sampling and detecting a number of wireless devices using, for example, a common communication protocol (e.g., radio frequency identification (RFID), Bluetooth™, etc.).

The particular store may correspond with an exact location, a type of store (e.g., fast food, cellular/communication, sporting goods, clothing, department, etc.), a particular brand of store (e.g., McDonalds (TM), ORANGE (TM), etc.), or other distinguishable feature.

Thus, in act 220, if it is determined that ambient information should be captured, act 230 may be performed. However, if it is determined that it is not desirable to capture ambient information, act 220 may be repeated.

In act 230, ambient information is captured by, for example, the MS. According to an embodiment of the present system, ambient information may include, for example, one or more of: ambient sound information received from a microphone (MIC) of the MS, image or lighting information received from a camera of the MS, and visual and/or audio information received by a receiver of the MS. The process then continues to act 240. However, if sufficient information was captured prior to act 230, at least part of act 230 may be skipped, as desired.

In act 240, ambient information is processed to retrieve any watermarks contained in the ambient information. The watermarks may be detected by referring to a watermark sound pattern information contained locally (i.e., in the MS) or in a sound pattern database (e.g., 350 as will be described below). The watermarks may be pushed or downloaded to the MS at predetermined times so as to constantly update watermark sound pattern information contained in a watermark sound pattern database of the MS. Further, the watermark sound pattern database may contain a list of active and inactive watermarks. The watermarks may correspond with watermarks which are deemed to be suited to the user of the MS based upon, user profile information. The process then continues to act 250.

In act 250, it is determined whether a watermark is detected in the processed ambient information. A pattern may be detected by comparing the processed ambient information with predetermined information such as, for example, watermark sound pattern information which may be stored in a sound pattern database. This sound pattern database may be located locally in the MS or remotely in, for example, a remote sound pattern database (DB). Accordingly, the MS may wirelessly access the remote sound pattern database via, for example, a BS and/or download the sound pattern database or parts thereof. In order to conserve resources, the comparison may be performed remotely from the MS and the results of the comparison may be transmitted to the MS. Accordingly, the process may transmit the captured information and/or parts thereof, to a BS for further processing to detect a watermark in the captured ambient information.

If it is determined that a watermark is detected in the processed ambient information, then the process may continue to act 260. However, if it is determined that a watermark is not detected in the processed ambient information, the process may repeat act 230. Thus, if a watermark is not detected, the process may repeat act 230.

In act 260, the detected watermark is compared to user profile information which may be included within the predetermined information. The user profile information may include one or more entries which correspond with, for example, sound pattern information contained in the sound pattern database. Further, the user profile information may include information such as information related to one or more user identification (ID), predicted purchase information, user purchase history, time of purchase history, purchase type history, family information, friend information, purchase location, etc. After completing act 260, the process may continue to act 270.

In act 270, if a match between the detected watermark and the user profile information exists, the process continues to act 280. However, if a match between the detected watermark and the user profile information does not exist, the process may continue to act 286.

In act 280, the process may perform a desired action. For example, a desired action may include providing feedback information by receiving, generating and/or rendering information on the MS. The feedback information may include information which corresponds with one or more entries in the detected watermark and/or the user profile information. These entries may also include information related to one or more desired actions which are to be taken. These actions may include, for example, providing feedback information by receiving, generating and/or rendering information on the MS. For example, the feedback information may include information to change and/or display screen content on the MS and/or request a user input. For example, according to the present system, desired actions may include sending an e-mail, SMS, coupons, or other types of messages including desired information to the MS.

After completing act 280, the process may continue to act 282 where the user input may be received and an appropriate action may be performed. The process may then continue to act 284.

In act 284, the process may perform an update process. This update process may include updating the detected watermark information and/or the user profile information to include information related to one or more of the detected watermark, information related to the user's input, time, location, purchases, etc. The process may then end in act 299.

In act 286, the MS may query a remote database so that the detected watermark may be compared to user profile information contained in a remote user database. Thereafter, the process continues to act 288.

In act 288, if a match between the detected watermark and the user profile information contained in the remote user database exists, the process continues to act 289. However, if a match between the detected watermark and the user profile information contained in the remote user database does not exist, the process may continue to act 290.

In act 289 the results of the query performed in act 286 are transmitted to the MS. Thereafter, the process continues to act 280

In act 290 the results of the query performed in act 286 are transmitted to the MS. Thereafter, the process continues to act 284.

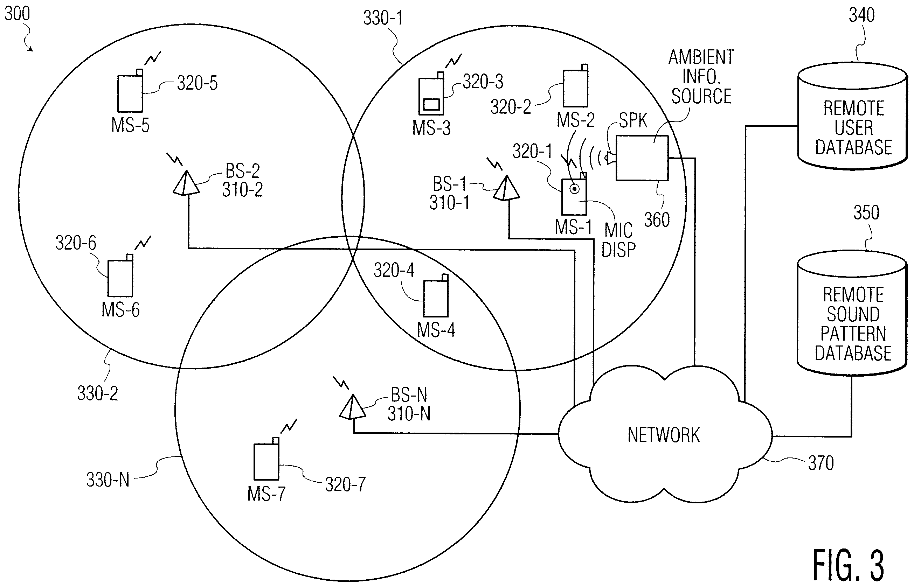

FIG. 3 shows a schematic of an embodiment of the present system. The system 300 may include one or more of base stations (BSs) 310-1-310-N, mobile stations (MSs) 320-1-320-N, a remote user database (DB) 340, a sound pattern database 350, an ambient information source 360, and a network 370. The MSs 320-1-320-N are operatively coupled to corresponding BSs 310-1-310-N and/or the network 370 using any suitable transmission protocol such as, for example, code division multiple access (CDMA), time division multiple access (TDMA), global system for mobile communications (GSM), etc. Each BS 310-1-310-N has a corresponding service area 330-1-330-N and may be operatively coupled to the network 370 using any suitable transmission protocol. The ambient information source 360 can generate ambient information, such as, for example, an audible sound, which may be received by input devices, such as, for example, a microphone (MIC) of one or more of the MSs 320-1-320-N. The ambient information may include watermark information. The ambient information source 360 may be operatively coupled to the sound pattern database and/or remote user database via the network 370 using any suitable transmission protocol. For example, the ambient information source 360 may be operatively coupled directly to the network 370 or may be operatively coupled to the network 370 via one or more of the BSs 310-1-310-N. The remote user database 340 and the sound pattern database 350 may be located remotely from each other or may be combined in a single database. Further, portions of each of the remote user database 340 and the sound pattern database 350 may be located remotely. The sound pattern database 350 may include watermark information and other related information. In one example, the ambient information source 360 may generate audible information via a speaker (SPK) or visual information via, for example, a display and/or a light source (e.g., ambient lighting and/or infrared (IR) lighting). However, in another embodiment, it is envisioned that the ambient information source 360 may transmit the ambient information via, a radio frequency (RF).

In referring back to FIG. 1, in accordance with an embodiment of the present system, the interface for interaction may include a browser that provides portions that facilitate the selection and/or initiation of content rendering. For example, a program in accordance with the present system may provide an address bar wherein an address of the content may be provided by the system and/or user. This address may be selected by the system to promote advertising, etc., in accordance with the feedback information provided in act 280. Accordingly, the feedback information may include address information of, for example, a desired website. Thus, for example, advertising or other information may be pushed to a user. Further, content including tallied results (e.g., a collection of reaction indications from a plurality of users) may be provided to the user during browsing of the content on the server and/or the content and the tallied results may be transferred to a user device, such as a laptop computing device, set-top box, etc. during act 280-284.

In accordance with the present system, content may be rendered within the content rendering portion 110 and/or the content may be rendered within a separate rendering window (e.g., for visual content) and/or may be rendered on a content rendering device, such as an audio speaker. Content may be rendered as in prior systems (e.g., from a beginning to an end of the content), or the user may choose to render selected content portions.

The GUI 100 may provide interaction elements for a selection and/or rendering initiation, etc., of the content, such as may be provided by a play selector 112, illustratively shown as a play/pause indication, and/or may be provided by a menu indication 114, selection of which may initiate a pop-up menu structure as may be readily appreciated by a person of ordinary skill in the art. The pop-up menu structure may provide interaction elements (radio buttons, dialogue boxes, etc.) that may facilitate a search of/for content, selection of content, "buddy" activities, such as sharing of content, reaction indications, etc.

In accordance with the present system, other elements may be utilized for initiation of rendering of portions of the content. For example, the GUI 100 in accordance with the present system, may provide one or more of a message area (e.g., SMS and/or email) 130. The message area may contain address and/or content which is in accordance with the action performed in act 280.

As may be readily appreciated, the granularity of the horizontal and vertical axis may be dynamically altered in accordance with an embodiment of the present system based on a total rendering time of the content and based on the number of reaction indications that are provided for the content

Returning to FIG. 1, the GUI 100 may also provide a playlist/history portion 160 wherein content is selected in accordance with the detected watermark and the corresponding user profile information. Further, each of the items of the playlist/history may include one or more of an indication 164 of a number of reaction indications associated with the content, a summary 166 of the content and an indication 168 to facilitate addition of the content to a recommended list of content and/or a playlist each of which corresponds with the content of the playlist/history portion 160. A filter option 150 may be provided to enable a user to filter selections using a predetermined criteria. The predetermined criteria may be determined in accordance with the detected watermark and the corresponding user profile information. The user comment portion 120, buddy portion 140, and message area 124 may include information that is selected in accordance with the detected watermark and the corresponding user profile information. For example, the comment portion 120 may include comments related to the content that is rendered on the display. The comments may be filtered according to a predetermined comment criteria. For example, the predetermined comment criteria may be set so that only comments from users within a particular geographic area or type of store are included. Thus, for example, if a user enters a store such as Bloomindales and a watermark from a store such as Bloomingdales is detected from ambient sound information, the system may only include comments from other Bloomindales shoppers (e.g., who are located anywhere in a geographic region such as, for example, the United States) in the GUI. Likewise, if the user profile information indicates that the user of the MS is a new parent, then information which corresponds with other new parents may be displayed.

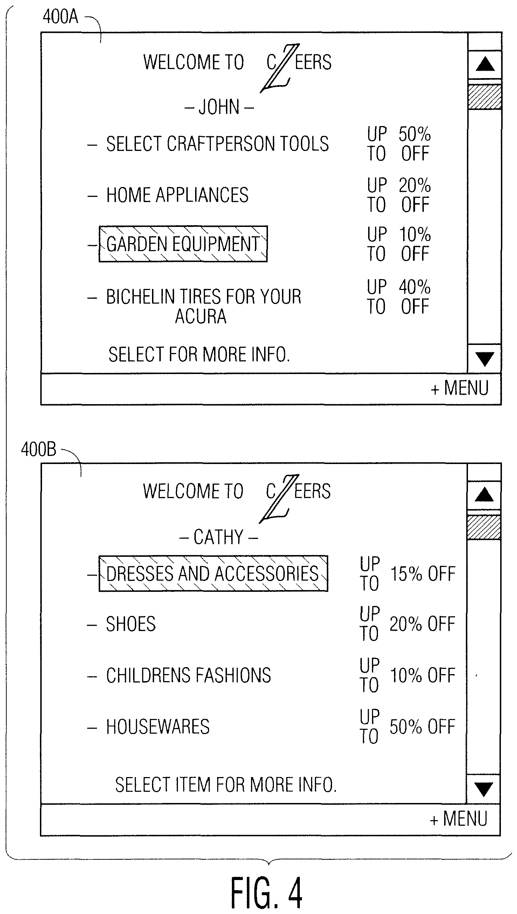

FIG. 4 shows further graphical user interfaces in accordance with embodiments of the present system. Graphical user interface 400-A includes content information which corresponds with a first user while graphical user interface 400B corresponds with another user. Interfaces 400A and/or 400B are rendered by an MS in response to the detection of one or more watermarks in ambient information which is captured by, for example, a transducer such as a microphone (MIC) of the MS. The information rendered on the interfaces 400A and/or 400B may be pushed to the MS or may be accessed by the MS (e.g., using a browser) using a site address which was transmitted to the MS accordance with the detected watermark and the corresponding user profile information.

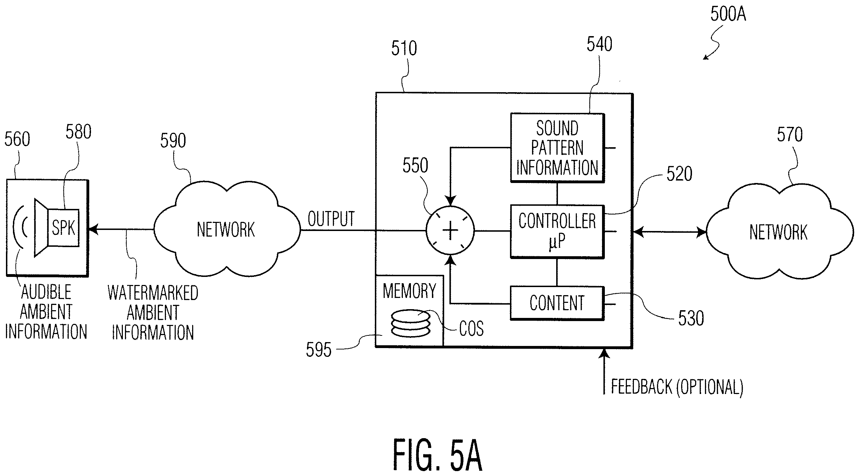

FIG. 5A shows an ambient information source in accordance with an embodiment of the present system. The ambient information source 500A may include one or more of a processing portion 510, an output device 560, and a network 570.

The processing portion 510 may include one or more controllers 520 for controlling the overall operation of the processing portion 510, a sound pattern information portion 540, a mixing portion 550, a content portion 530, and/or a memory device 595. The memory device 595 may include one or more storage devise such as, for example, optical drives (e.g., CD, DVD, etc.), flash memory, read only memory (ROM), random access memory (RAM), hard disc drives, etc. which can store audio and/or visual content.

The processing portion 510 may communicate with a remote user interface (e.g., 340) and/or a sound pattern database (e.g., 350) via network 570 to obtain desired information. For example, the content processing 510 may communicate with the sound pattern database (e.g., 350) to obtain (e.g., via a query, etc.) sound pattern information which corresponds with, for example, the ambient information source 500A. According to an embodiment of the present system, the sound pattern information may be particular to a location, an entity operating the ambient information source (e.g., McDonalds™, Exxon/Mobil™, etc.), a region, type of store, time, day, date, year, a user setting, etc. The sound pattern information that is received from sound pattern database (e.g., 350) may be stored in the sound pattern information portion 540.

The processing portion 510 may obtain audio and/or visual content via the network 570 and/or the memory 595 and place the received content in the content portion 530. If the audio and/or audio-visual content is received from the network 570, it may be received via any suitable method. For example, the audio and/or visual content may be received via commercial satellite and/or terrestrial content providers.

The controller 520 may then process the sound pattern information and the audio and/or audio-visual content and output the processed information as ambient information which includes a watermark to the output device 560 directly or via a network 590. The output device 560 then outputs corresponding ambient information which may be detected by a transducer such as a microphone of the MS. As watermarking methods are well known in the art, a further description thereof will not be provided. However, according to the present system the watermark contained in the ambient information should not be perceptible by the user. The controller 520 may translate or otherwise transform the sound information into a desired format such that it may be inserted into content information. In a similar fashion, an MS may use a corresponding process to capture sound pattern information from ambient information that it may receive from a microphone using any suitable method.

According to the present system, watermarked ambient information, may include a header and/or a trailer. The header may be seen as a sub (shorter) pattern common to all watermarked ambient information which may be used in the present method. The trailer may be another sub pattern immediately following the header and including useful information, such as an identification (ID) of a watermark, and/or other indications relevant to the present method.

In the present illustration, the header may be common to all watermarked ambient information generated by the present method. However, it is also envisioned that several headers may be used to identify a type of sound pattern, provided that they are known from, for example, a mobile agent uploaded onto an MS of the present system.

With a limited number of headers to recognize, the monitoring of ambient sound by the mobile agent may be facilitated, thereby reducing the resource requirements and the power consumption. One example of different headers may be for example: a header for sound patterns broadcasted to inform an MS of watermarked ambient information (e.g., watermarked content).

Whether one or a limited number of headers is used, a MS may only have to listen and search for a limited number of sound pattern headers and may, thus, conserve energy.

The processing portion 510 may include a transcoder similar to a modem (digital to analog conversion) and may transform binary strings into a series of sounds (using the speaker 111) characterized by their respective frequencies and time interval between successive sounds. The MS may include an agent to retrieve this information from, for example, watermarked ambient sound information.

The output device 560 may include one or more speakers (SPK) 590 which can output an audible signal. Further, the output device 560 may include a display for outputting visual signals. The output device 560 may also include a feedback system to feedback at the output audible signal and/or other information to, for example, the processing portion 510.

The network 570 may include any suitable network for communication with other devices. Accordingly, the network 570 may include a wide area network (WAN), a local area network (LAN), the Internet, an intranet, etc.

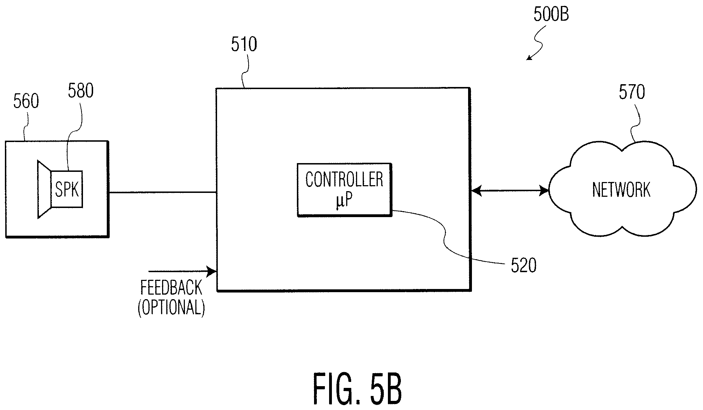

FIG. 5B shows another ambient information source 500B in accordance with another embodiment of the present system. The ambient information source 500B is configured to receive audio and/or audio-visual content which may include a watermark when it is received by, for example, a processing portion 510B. Accordingly, the processing portion 510B may process (e.g., by down converting, decoding, etc.) the received audio and/or audio visual information and transmit the processed audio and/or audio-visual signal to an output device such as, for example, the speaker 560. Thus, a watermark may be added to a signal before transmission by for example, a network, etc. Accordingly, one or more watermarks may be transmitted with, for example, music, soundtracks, commercials, TV shows, elevator-type music, manufacture's product audio and/or audio-visual literature, etc.

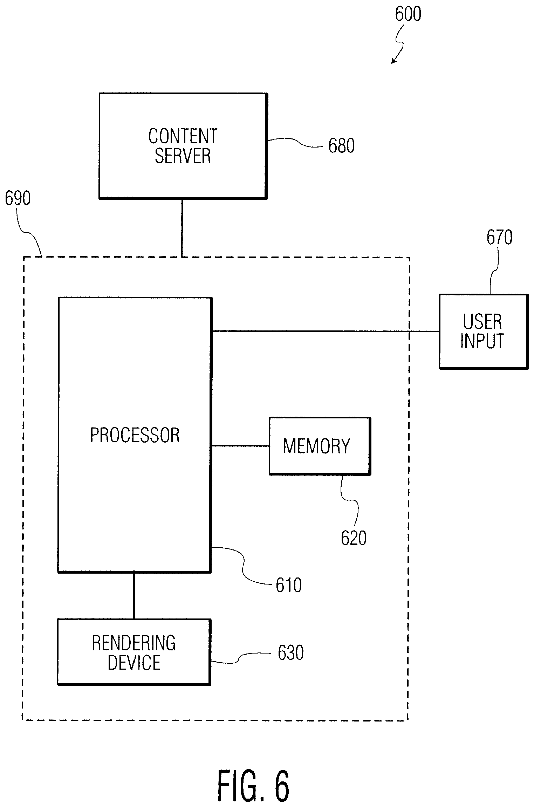

FIG. 6 shows a system 600 in accordance with an embodiment of the present system. The system 600 includes a user device 690 that has a processor 610 operationally coupled to a memory 620, a rendering device 630, such as one or more of a display, speaker, etc., a user input device 670 and a content server 680 operationally coupled to the user device 690. The memory 620 may be any type of device for storing application data as well as other data, such as content, reaction indications, tallied reaction indications, comments, graphing data, such as heat map data, heat line graph data, heat comment graph data, etc., play lists, recommended content, etc. The application data and other data are received by the processor 610 for configuring the processor 610 to perform operation acts in accordance with the present system. The operation acts include controlling at least one of the rendering device 630 to render a GUI such as, for example, GUIs 100, and/or to render content. The user input 670 may include a keyboard, mouse, trackball, a microphone, or other devices, including touch sensitive displays, which may be stand alone or be a part of a system, such as part of a personal computer, personal digital assistant, mobile phone, converged device, or other rendering device for communicating with the processor 610 via any type of link, such as a wired or wireless link. The user input device 670 is operable for interacting with the processor 610 including interaction within a paradigm of a GUI and/or other elements of the present system, such as to enable web browsing, content selection, such as provided by left and right clicking on a device, a mouse-over, pop-up menu, etc., such as provided by user interaction with a computer mouse, etc., as may be readily appreciated by a person of ordinary skill in the art.

In accordance with an embodiment of the present system, the rendering device 630 may operate as a touch sensitive display for communicating with the processors 610 (e.g., providing selection of a web browser, a Uniform Resource Locator (URL), portions of web pages, etc.) and thereby, the rendering device 630 may also operate as a user input device. In this way, a user may interact with the processor 610 including interaction within a paradigm of a UI, such as to support content selection, input of reaction indications, comments, etc. Clearly the user device 690, the processor 610, memory 620, rendering device 630 and/or user input device 670 may all or partly be portions of a computer system or other device, and/or be embedded in a portable device, such as a mobile telephone, personal computer (PC), personal digital assistant (PDA), converged device such as a smart telephone, etc.

The system and method described herein address problems in prior art systems. In accordance with an embodiment of the present system, the user device 690, corresponding user interfaces and other portions of the system 600 are provided for browsing content, selecting content, providing reaction indications, reaction indication palettes, etc., and for transferring the content and reaction indications, tallied reaction indications, etc., between the user device 690 and the content server 680.

The methods of the present system are particularly suited to be carried out by a computer software program, such program containing modules corresponding to one or more of the individual steps or acts described and/or envisioned by the present system. Such program may of course be embodied in a computer-readable medium, such as an integrated chip, a peripheral device or memory, such as the memory 620 or other memory coupled to the processor 610.

The computer-readable medium and/or memory 620 may be any recordable medium (e.g., RAM, ROM, removable memory, CD-ROM, hard drives, DVD, floppy disks or memory cards) or may be a transmission medium utilizing one or more of radio frequency (RF) coupling, Bluetooth coupling, infrared coupling etc. Any medium known or developed that can store and/or transmit information suitable for use with a computer system may be used as the computer-readable medium and/or memory 620.

Additional memories may also be used. The computer-readable medium, the memory 620, and/or any other memories may be long-term, short-term, or a combination of long-term and short-term memories. These memories configure processor 610 to implement the methods, operational acts, and functions disclosed herein. The operation acts may include controlling the rendering device 630 to render elements in a form of a UI and/or controlling the rendering device 630 to render other information in accordance with the present system.

A coder/decoder (CODEC) may code/decode information as necessary.

The memories may be distributed (e.g., such as a portion of the content server 680) or local and the processor 610, where additional processors may be provided, may also be distributed or may be singular. The memories may be implemented as electrical, magnetic or optical memory, or any combination of these or other types of storage devices. Moreover, the term "memory" should be construed broadly enough to encompass any information able to be read from or written to an address in the addressable space accessed by a processor. With this definition, information on a network is still within memory 620, for instance, because the processor 610 may retrieve the information from the network for operation in accordance with the present system. For example, a portion of the memory as understood herein may reside as a portion of the content server 680. Further, the content server 680 should be understood to include further network connections to other devices, systems (e.g., servers), etc. While not shown for purposes of simplifying the following description, it is readily appreciated that the content server 680 may include processors, memories, displays and user inputs similar as shown for the user device 690, as well as other networked servers, such as may host web sites, etc. Accordingly, while the description contained herein focuses on details of interaction within components of the user devices 690, it should be understood to similarly apply to interactions of components of the content server 680.

The processor 610 is capable of providing control signals and/or performing operations in response to input signals from the user input device 670 and executing instructions stored in the memory 620. The processor 610 may be an application-specific or general-use integrated circuit(s). Further, the processor 610 may be a dedicated processor for performing in accordance with the present system or may be a general-purpose processor wherein only one of many functions operates for performing in accordance with the present system. The processor 610 may operate utilizing a program portion, multiple program segments, or may be a hardware device utilizing a dedicated or multi-purpose integrated circuit.

The processor 610 may perform a reverse transformation on the detected ambient information to pull out binary string data that corresponds with, for example, a watermark. The reverse transformation may be performed using algorithms to detect different frequencies (e.g., a Fourier transform) and proceed with demodulation of the detected ambient information (e.g., ambient sound). The detected ambient information may be compared with, for example, sound pattern information. A weighing system may be used to weigh matches.

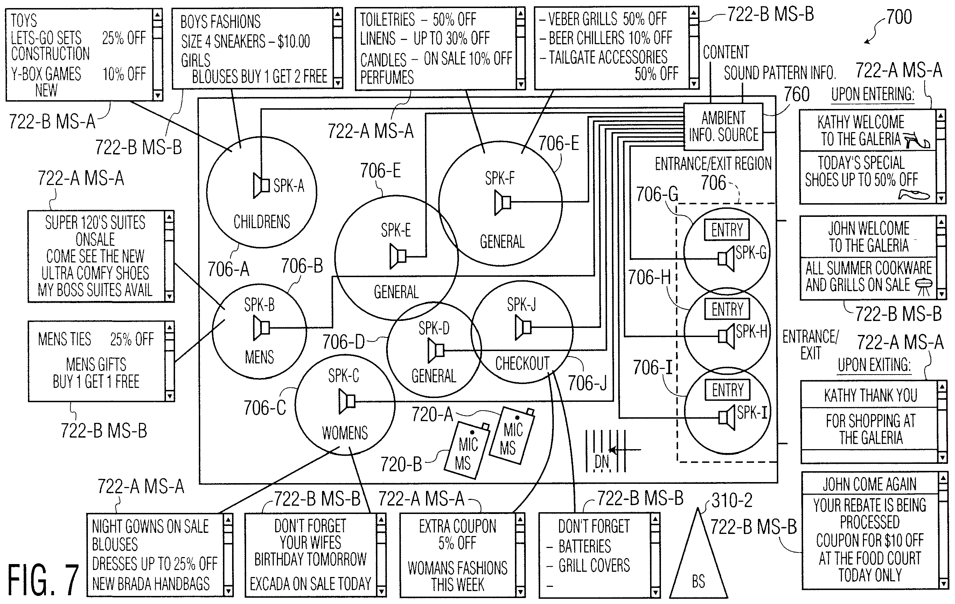

FIG. 7 shows an operation of a system in accordance with an embodiment of the present system in a store-type setting. The system 700 may include one or more ambient information sources 760, speakers SPK-A-SPK-J, one or more BSs 310-2, and MSs 720-A and 720-B.

MS 720-A has an output device such as, for example, a screen 722-A and MS 720-B has an rendering/output device such, as for example, screen 722-B.

Each of the speakers SPK-A-SPK-J has a respective audible speaker zone 706-A-706-J and may be operatively coupled to the ambient information source 760. Although the individual speaker zones are shown separate from each other, speaker zones may overlap at least in part with an adjacent speaker zone.

The ambient information source may receive sound pattern information and content information such as audio and/or audio-visual information from one or more sources. The content information may include the sound pattern information (e.g., watermarks) when received or the sound pattern information may be inserted into, or otherwise mixed with, the content information by the ambient information source after reception. The sound pattern information may be received from a sound pattern database via, for example, a network (i.e., the Internet, an internet, a WAN, a LAN, etc.) or other suitable communication methods (e.g., a wired and/or wireless connection). Further, the content and/or sound pattern information may be received from a network provider such as, for example, ABC, NBC, CBS, HBO, Satellite radio, a cellular provider, etc. The ambient information source 760 may transmit the sound pattern information and the content information as watermarked ambient information to speakers SPK-A-SPK-J. In the present embodiment, the ambient information source transmits the watermarked ambient information including the sound pattern information to predetermined speakers of the speakers SPK-A-SPK-J. Accordingly, the ambient information source may transmit the same sound pattern information to each of the speakers SPK-A-SPK-J or may transmit different sound pattern information to one or more of the speakers SPK-A-SPK-J. In the present embodiment, the ambient information source may transmit sound pattern information that may identify a specific region of area 704, to a corresponding speaker of the speakers SPK-A-SPK-J. Thus, assuming that area 704 represents, for example, a general department store, each speaker of speakers may transmit information that is specific to a section of the department store sales area. For example, the ambient information source 760 may transmit sound pattern information that is unique to a "children's" section to speaker SPK-A; may transmit sound pattern information that is unique to a "men's" section to speaker SPK-B; and may transmit sound pattern information that is unique to an entry section of the general department store to speakers SPKs-G-SPK-I. Accordingly, sound pattern information (watermarks) which are specific to regions of the area 704 may be identified by the MSs 702-A and 702-B.

With reference to the screens 722-A and 722-B, each screen illustrates an exemplary screen which may be rendered when the corresponding MS is located in a given section as shown. Further, the watermark information may be used in accordance with the user profile information to determine a desired action to be taken. For example, assuming that MS 720-A is located a section which corresponds with the audible speaker zone 706-A, the MS, via its microphone (MIC), may detect a watermark in ambient sound information that is specific to, and output by, the speaker SPK-A. This watermark may be unique to, or otherwise include, information that is desirable to, a section which corresponds with the audible speaker zone 706-A. When it is determined that a watermark is present, user profile information may be accessed to determine a desired action to be taken which may correspond with the section in which an MS is located and the user profile information. Further, the user profile information may be used by, for example, an advertising agent to determine the desired action and form corresponding feedback information. The advertising agent may also use information that is unique to a certain entity in addition to the user profile information. However, the user profile information may also include information that is unique to the entity. Accordingly, the advertising agent may include information about the department store, such as, inventory information, price information, warranty information, manufacturer information, color information, etc. Further, the advertising agent may match the user profile information with the information that is unique to the entity and based upon this information form corresponding feedback information. The advertising agent may reside in the MS or may reside at a remote location. As profiling information and/or advertising information are commonly used by one skilled in the art, and are beyond the scope of the present system and/or method, for the sake of clarity, a further description thereof will not be given.

Referring back to the desired action, in the present embodiment, the desired action may include providing feedback information by receiving, generating, and/or rendering information on the MS 760-A that is in accordance with at least the detected watermark, the user profile information and/or information that is unique to the current entity. For example, using this information, screen 722-A may be rendered. With reference to screen 722-B, as the user profile information for MS 720-B is different from that user profile information of the user of MS 720-A, screen 722-B may display different information from screen 722-A even though the same watermark and/or information that is unique to the entity was used. However, in alternative embodiments, it is envisioned that two or more watermarks may be output by a speaker. Further, it is also envisioned that the sound pattern information contained in each MS may be set in accordance with a user. Thus, MS 720-A may determine that a watermark was output by, for example, speaker SPK-A while MS 720-B, using different sound pattern information, may not detect the watermark. Accordingly, MS 720-A perform a comparison process to compare the detected watermark with at least user profile information while MS 720-B may not which may conserve system resources.

Further, the user profile information may be updated in real time each time a purchaser purchases a product.

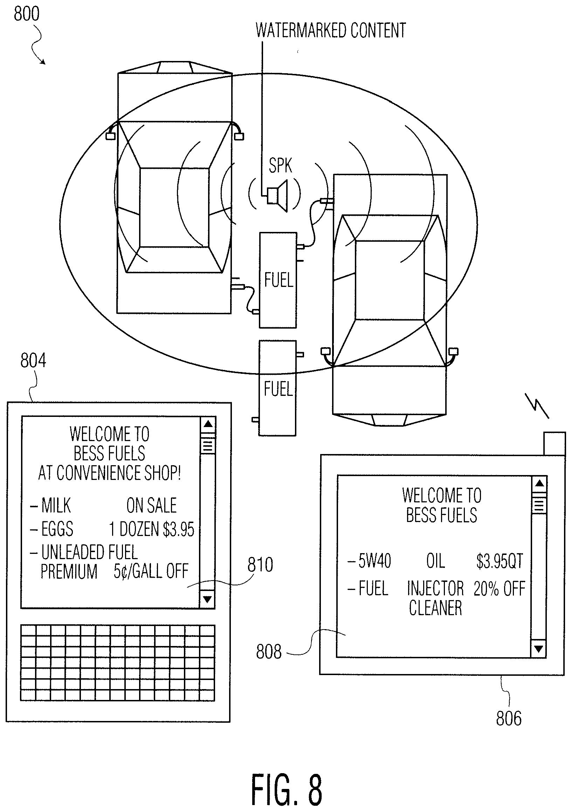

FIG. 8 shows an operation of a system in accordance with an embodiment of the present system in another store-type setting. The system 800 may be installed in an outdoor setting such as a gasoline station and may include a speaker 802 which outputs content (e.g., music, voice information, instructions, etc.) which may include sound pattern information including a watermark. MSs 804 and 806 may detect the watermark and display information on screens 810 and 808, respectively. As the user profile information is assumed to be different in both of the MSs 804 and 806, they display different information on screens 810 and 808 respectively.

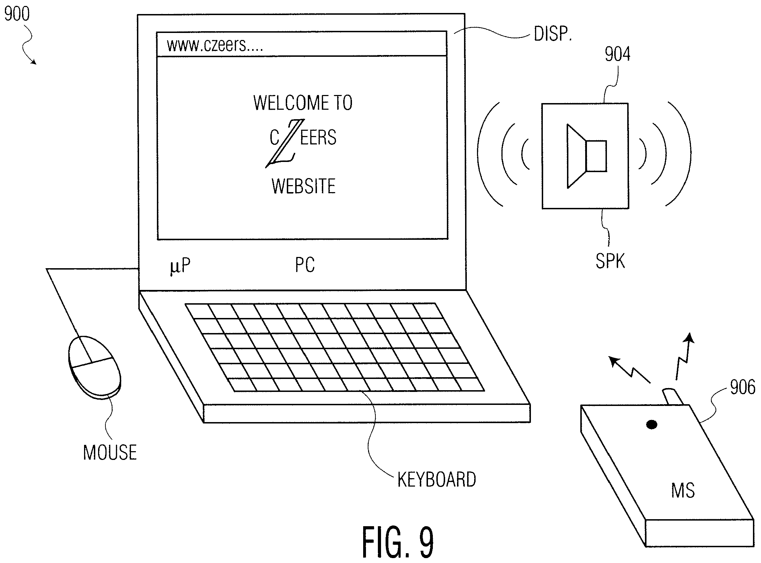

FIG. 9 shows an operation of a system in accordance with another embodiment of the present system in a PC-type setting. The system 900 may be include a personal computer (PC) 902 that has a speakers 904 which output content (e.g., music, etc.) which may include sound pattern information including a watermark. The speakers 904 may be driven by a controller of the PC 902. The content may correspond with information that is stored on the PC 902 or may correspond with content that is received from a website that a browser of the PC 902 accesses and which contains a watermark. MS 906 may detect the watermark and perform actions in accordance with the present system. For example the MS may compare the watermark to sound pattern information contained in a sound pattern database and may perform a desired action in accordance with the present system. For example, an e-mail window may be opened in a GUI of the MS 906. The e-mail window may contain information that was generated in accordance with the watermark and the user profile information. For example, address, subject, and body fields, of the e-mail may include information that was determined in accordance with the watermark and the user profile information. The user may then respond to this email, by for example, filling in blank fields, and/or selecting a send option.

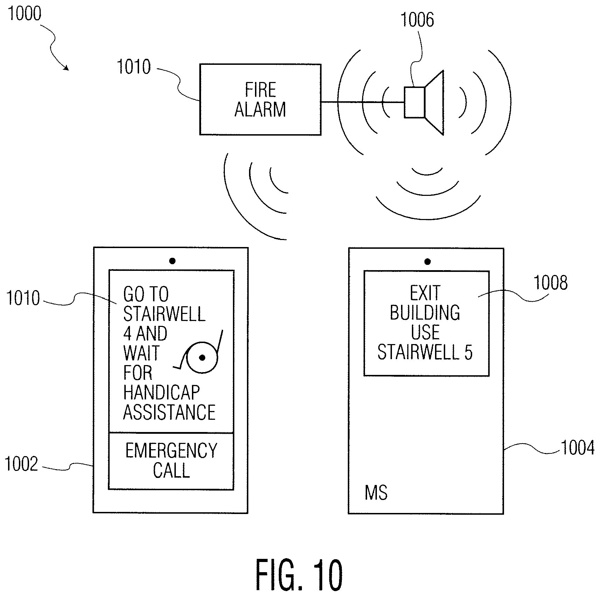

FIG. 10 shows an operation of a system in accordance with an embodiment of the present system in an emergency-type setting. The system 1000 may include an emergency system such as a fire alarm, and may be located in a building or other structure. An alarm controller 1010 may output content as a watermarked ambient information to a speaker 1006. The content may include an emergency signal. When detecting the watermark in ambient information, MSs 1008 and 1010 may, output information that is in accordance with the detected watermark (or watermarks) and respective user profile information of a user of the corresponding MS. Accordingly, each MS may render different safety/evacuation information as shown.

As watermark creation and embedding methods are known in the art, for the sake of clarity, these methods will not be discussed.

Finally, the above discussion is intended to be merely illustrative of the present system and should not be construed as limiting the appended claims to any particular embodiment or group of embodiments. For example, the present system may be utilized to determine the present of distinguishing information such as a watermark and push content which corresponds with the detected watermark and/or the user profile information. The present system may be provided in a form of a content rendering device, such as a MS. A further embodiment of the present system, may provide a UI that operates as a browser extension, such as a rendered browser toolbar, that can build a content rendering playlist, such as a video playlist. In addition, the present system may push predetermined content while a user is browsing the Internet.

Thus, while the present system has been described with reference to exemplary embodiments, including user interfaces, it should also be appreciated that numerous modifications and alternative embodiments may be devised by those having ordinary skill in the art without departing from the broader and intended scope of the present system as set forth in the claims that follow. Further, while exemplary user interfaces are provided to facilitate an understanding of the present system, other user interfaces may be provided and/or elements of one user interface may be combined with another of the user interfaces in accordance with further embodiments of the present system.

The section headings included herein are intended to facilitate a review but are not intended to limit the scope of the present system. Accordingly, the specification and drawings are to be regarded in an illustrative manner and are not intended to limit the scope of the appended claims.

In interpreting the appended claims, it should be understood that:
a) the word "comprising" does not exclude the presence of other elements or acts than those listed in a given claim;
b) the word "a" or "an" preceding an element does not exclude the presence of a plurality of such elements;
c) any reference signs in the claims do not limit their scope;
d) several "means" may be represented by the same item or hardware or software implemented structure or function;
e) any of the disclosed elements may be comprised of hardware portions (e.g., including discrete and integrated electronic circuitry), software portions (e.g., computer programming), and any combination thereof;
f) hardware portions may be comprised of one or both of analog and digital portions;
g) any of the disclosed devices or portions thereof may be combined together or separated into further portions unless specifically stated otherwise;
h) no specific sequence of acts or steps is intended to be required unless specifically indicated; and
i) the term "plurality of" an element includes two or more of the claimed element, and does not imply any particular range of number of elements; that is, a plurality of elements may be as few as two elements, and may include an immeasurable number of elements.

## Claims

1. A method of rendering information comprising acts of:
capturing ambient sound information, comprising ambient sound information from an ambient sound information source;
determining whether one or more distinguishing patterns is present in the captured ambient sound information;
requesting content information when it is determined that the one or more distinguishing patterns is present in the captured ambient sound information; and,
rendering the requested content information; the method being **characterized in that** the distinguishing patterns are watermarks from a sound pattern database of created watermarks particular to an entity operating the ambient sound information source.

2. The method of claim 1, further comprising an act of accessing user profile information (340), wherein the content information is selected in accordance with the one or more present watermarks and the user profile information.

3. The method of claim 2, wherein user profile information comprises information related to one or more user identification, ID, user purchase history, time of purchase history, purchase type history, family information, friend information, purchase location.

4. The method of one of the previous claims, wherein the one or more watermarks are contained in a header or a footer of at least a portion of the ambient sound information.

5. The method of one of the previous claims, wherein the act of determining whether one or more watermarks is present in the captured ambient information, comprises searching a list of watermarks that was transmitted from a base station (310-1 to 310-N) to a mobile station (320-1 to 320-N).

6. The method of one of the previous claims, further comprising an act of transmitting the requested content information to a mobile station (320-1 to 320-N) only when it is determined that the one or more watermarks are present in the captured ambient information.

7. The method of one of the previous claims, further comprising an act of transmitting from a mobile station (320-1 to 320-N) to a base station (310-1 to 310-N), a query comprising the captured ambient information including the one or more watermarks.

8. A mobile station (320-1 to 320-N) of rendering information, said mobile station being arranged to:
capture ambient sound information, comprising ambient sound information from an ambient sound information source;
determine whether one or more distinguishing patterns is present in the captured ambient sound information;
request content information when it is determined that the one or more distinguishing patterns is present in the captured ambient sound information; and
render the requested content information;
the mobile station being **characterized in that** the watermarks from a sound pattern database of created watermarks particular to an entity operating the ambient sound information source.

9. The mobile station of claim 8, further arranged to receive the requested content information from a base station (310-1 to 310-N).

10. The mobile station of one of the previous claims 8 and 9, further comprising an act of accessing user profile information (340), wherein the content information is selected in accordance with the one or more present watermarks and the user profile information.

11. The mobile station of one of the previous claims 8 to 10, wherein user profile information comprises information related to one or more user identification, ID, user purchase history, time of purchase history, purchase type history, family information, friend information, purchase location.

12. The mobile station of one of the previous claims 8 to 11, further arranged to search a list of watermarks that was previously transmitted from a base station (310-1 to 310-N) to said mobile station (320-1 to 320-N) to determine whether one or more watermarks is present in the captured ambient sound information.

13. A computer program stored on a computer readable memory medium, the computer program being configured to perform a method of rendering information according to any of the claims 1 to 7.

## Patentansprüche

1. Verfahren zum Wiedergeben von Informationen, aufweisend die folgenden Vorgänge:
Erfassen von Raumklanginformationen, die Raumklanginformationen aus einer Raumklanginformationsquelle umfassen;
Bestimmen, ob ein oder mehrere Unterscheidungsmuster in den erfassten Raumklanginformationen vorhanden sind;
Anfordern von Inhaltsinformationen, wenn bestimmt wird, dass das eine oder die mehreren Unterscheidungsmuster in den erfassten Raumklanginformationen vorhanden sind; und
Wiedergeben der angeforderten Inhaltsinformationen;
wobei das Verfahren **dadurch gekennzeichnet ist, dass** die Unterscheidungsmuster Wasserzeichen aus einer Klangmusterdatenbank erzeugter Wasserzeichen sind, die für einen Betreiber der Raumklanginformationsquelle einzigartig sind.

2. Verfahren nach Anspruch 1, des Weiteren aufweisend einen Vorgang des Zugreifens auf Benutzerprofilinformationen (340), wobei die Inhaltsinformationen entsprechend dem einen oder den mehreren vorhandenen Wasserzeichen und den Benutzerprofilinformationen gewählt werden.

3. Verfahren nach Anspruch 2, wobei Benutzerprofilinformationen Informationen aufweisen, die sich auf eines oder mehrere von Benutzeridentifikation(en), Benutzerkaufverhalten, Kaufzeitverhalten, Kaufinhaltsverhalten, Familieninformationen, Freundschaftsinformationen, Kaufort beziehen.

4. Verfahren nach einem der vorangehenden Ansprüche, wobei das eine oder die mehreren Wasserzeichen in einer Kopfzeile oder einer Fußzeile von mindestens einem Teil der Raumklanginformationen enthalten sind.

5. Verfahren nach einem der vorangehenden Ansprüche, wobei der Vorgang zum Bestimmen, ob ein oder mehrere Wasserzeichen in den erfassten Rauminformationen vorhanden sind, die Suche in einer Liste von Wasserzeichen aufweist, die von einer Basisstation (310-1 bis 310-N) zu einer Mobilstation (320-1 bis 320-N) gesendet wurde.

6. Verfahren nach einem der vorangehenden Ansprüche, des Weiteren umfassend einen Vorgang zum Senden der angeforderten Inhaltsinformationen zu einer Mobilstation (320-1 bis 320-N) nur dann, wenn bestimmt wird, dass das eine oder die mehreren Wasserzeichen in den erfassten Rauminformationen vorhanden sind.

7. Verfahren nach einem der vorangehenden Ansprüche, des Weiteren umfassend einen Vorgang zum Senden einer Anfrage von einer Mobilstation (320-1 bis 320-N) zu einer Basisstation (310-1 bis 310-N), aufweisend die erfassten Rauminformationen einschließlich des einen oder der mehreren Wasserzeichen.

8. Mobilstation (320-1 bis 320-N) zum Wiedergeben von Informationen, wobei die Mobilstation angeordnet ist zum:
Erfassen von Raumklanginformationen, die Raumklanginformationen aus einer Raumklanginformationsquelle umfassen;
Bestimmen, ob ein oder mehrere Unterscheidungsmuster in den erfassten Raumklanginformationen vorhanden sind;
Anfordern von Inhaltsinformationen, wenn bestimmt wird, dass das eine oder die mehreren Unterscheidungsmuster in den erfassten Raumklanginformationen vorhanden sind; und
Wiedergeben der angeforderten Inhaltsinformationen;
wobei die Mobilstation **dadurch gekennzeichnet ist, dass** die Unterscheidungsmuster Wasserzeichen aus einer Klangmusterdatenbank erzeugter Wasserzeichen sind, die für einen Betreiber der Raumklanginformationsquelle einzigartig sind.

9. Mobilstation nach Anspruch 8, die des Weiteren zum Empfangen der angeforderten Inhaltsinformationen von einer Basisstation (310-1 bis 310-N) angeordnet ist.

10. Mobilstation nach einem der vorangehenden Ansprüche 8 und 9, des Weiteren umfassend einen Vorgang des Zugreifens auf Benutzerprofilinformationen (340), wobei die Inhaltsinformationen entsprechend dem einen oder den mehreren vorhandenen Wasserzeichen und den Benutzerprofilinformationen gewählt werden.

11. Mobilstation nach einem der vorangehenden Ansprüche 8 bis 10, wobei Benutzerprofilinformationen Informationen aufweisen, die sich auf eines oder mehrere von Benutzeridentifikation(en), Benutzerkaufverhalten, Kaufzeitverhalten, Kaufinhaltsverhalten, Familieninformationen, Freundschaftsinformationen, Kaufort beziehen.

12. Mobilstation nach einem der vorangehenden Ansprüche 8 bis 11, die des Weiteren zum Suchen nach einer Liste von Wasserzeichen angeordnet ist, die von einer Basisstation (310-1 bis 310-N) zur Mobilstation (320-1 bis 320-N) gesendet wurde, um zu bestimmen ob ein oder mehrere Wasserzeichen in den erfassten Raumklanginformationen vorhanden sind.

13. Computerprogramm, das auf einem computerlesbaren Speichermedium gespeichert ist, wobei das Computerprogramm zum Durchführen eines Verfahrens zum Wiedergeben von Informationen nach einem der Ansprüche 1 bis 7 gestaltet ist.

## Revendications

1. Procédé de rendu d'informations comprenant les actions suivantes :
- capturer des informations de son ambiant, comprenant des informations de son ambiant d'une source d'informations de son ambiant ;
- déterminer si un ou plusieurs motifs distinctifs sont présents dans les informations de son ambiant capturées ;
- demander des informations de contenu quand il a été déterminé que le ou les motifs distinctifs sont présents dans les informations de son ambiant capturées ; et
- rendre les informations de contenu demandées ; lequel procédé est **caractérisé en ce que** les motifs distinctifs sont des filigranes issus d'une base de données de motifs de sons de filigranes créés particuliers à une entité opérant la source d'informations de son ambiant.

2. Procédé selon la revendication 1, comprenant en outre une action consistant à accéder à des informations de profil d'utilisateur (340), et dans lequel les informations de contenu sont choisies en fonction du ou des filigranes présents et des informations de profil d'utilisateur.

3. Procédé selon la revendication 2, dans lequel les informations de profil d'utilisateur comprennent des informations concernant une ou plusieurs identifications d'utilisateur, un historique d'achat de l'utilisateur, un historique de temps d'achat, un historique de type d'achat, des informations sur la famille, des informations sur les amis, le lieu d' achat .

4. Procédé selon l'une des revendications précédentes, dans lequel le ou les filigranes sont contenus dans un en-tête ou un bas de page d'une partie au moins des informations de son ambiant.

5. Procédé selon l'une des revendications précédentes, dans lequel l'action consistant à déterminer si un ou plusieurs filigranes sont présents dans les informations ambiantes capturées comprend une recherche dans une liste de filigranes qui a été transmise depuis une station de base (310-1 à 310-N) vers une station mobile (320-1 à 320-N).

6. Procédé selon l'une des revendications précédentes, comprenant en outre une action consistant à transmettre les informations de contenu demandées vers une station mobile (320-1 à 320-N) uniquement lorsqu'il a été déterminé que le ou les filigranes sont présents dans les informations ambiantes capturées.

7. Procédé selon l'une des revendications précédentes, comprenant en outre une action consistant à transmettre depuis une station mobile (320-1 à 320-N) vers une station de base (310-1 à 310-N) une demande comprenant les informations ambiantes capturées comprenant le ou les filigranes.

8. Station mobile (320-1 à 320-N) pour rendre des informations, ladite station mobile étant conçue pour :
- capturer des informations de son ambiant, comprenant des informations de son ambiant d'une source d'informations de son ambiant ;
- déterminer si un ou plusieurs motifs distinctifs sont présents dans les informations de son ambiant capturées ;
- demander des informations de contenu quand il a été déterminé que le ou les motifs distinctifs sont présents dans les informations de son ambiant capturées ; et
- rendre les informations de contenu demandées ; laquelle station mobile est **caractérisée en ce que** les motifs distinctifs sont des filigranes issus d'une base de données de motifs de sons de filigranes créés, particuliers à une entité opérant la source d'informations de son ambiant.

9. Station mobile selon la revendication 8, conçue en outre pour recevoir les informations de contenu demandées depuis une station de base (310-1 à 310-N).

10. Station mobile selon l'une des revendications précédentes 8 et 9, comprenant en outre une action consistant à accéder à des informations de profil d'utilisateur (340), et dans laquelle les informations de contenu sont choisies en fonction du ou des filigranes présents et des informations de profil d'utilisateur.

11. Station mobile selon l'une des revendications précédentes 8 à 10, dans laquelle les informations de profil d'utilisateur comprennent des informations concernant une ou plusieurs identifications d'utilisateur, un historique d'achat de l'utilisateur, un historique de temps d'achat, un historique de type d'achat, des informations sur la famille, des informations sur les amis, le lieu d'achat.

12. Station mobile selon l'une des revendications précédentes 8 à 11, conçue en outre pour effectuer une recherche dans une liste de filigranes qui a été précédemment transmise depuis une station de base (310-1 à 310-N) vers ladite station mobile (320-1 à 320-N) afin de déterminer si un ou plusieurs filigranes sont présents dans les informations de son ambiant capturées.

13. Programme informatique stocké sur un support de mémoire lisible par ordinateur, lequel programme informatique est conçu pour réaliser un procédé de rendu d'informations selon l'une quelconque des revendications 1 à 7.
